# EUROPEAN PATENT APPLICATION

(11) **EP 1 228 915 A2**
(43) Date of publication of application: **07.08.2002**
(21) Application number: 02250329.6
(22) Date of filing: 17.01.2002
(51) Int. Cl.: B60K 15/05

(54) **Refuelling safety device**

(30) Priority: 19.01.2001 GB 0101370
(71) Applicant: Lees, Guy Rutherford, Chichester, West Sussex PO19 3JA (US); V & A International Licensing Limited, Llandaff North, Cardiff CF4 2JP (GB)
(72) Inventor: Lees, Guy Rutherford, Chichester PO19 3JA (GB)
(74) Representative: Evans, Huw David Duncan

(57) **Abstract**

A refuelling safety device 10 for mounting adjacent the filler cap 2 of a vehicle 1 is arranged to output a audible speech message to the person refuelling the vehicle 1 whenever the filler cap 2 of the vehicle 1 is accessed for refuelling, in order to remind the person of the correct the type or grade of fuel required for that vehicle.

## Description

The present invention relates to a refuelling safety device especially for road vehicles such as cars.

There are a wide range of fuels supplied by filling stations. These include various grades of unleaded and leaded petrol, and diesel. Occasionally a person accidentally puts the incorrect type or grade of fuel into the fuel tank of a vehicle. This results in the tank having to be drained and refilled with the correct fuel. This can be time consuming and expensive.

The invention seeks to provide a solution to this problem.

According to the present invention there is provided a refuelling safety device comprising:
a) speech means to relay a speech message, said speech means being locatable adjacent a filler cap of a vehicle, and
b) activator means to activate the speech means when the filler cap of the vehicle is accessed for refuelling, in use the speech means indicating to a person refuelling the vehicle the type or grade of fuel required for that vehicle.

The device may comprise a single unit which is securable to the inside of a cover flap for the filler cap, for example using self-adhesive tape, a hook-and-pile type fastening, a magnet or adhesive.

The activator means preferably includes a photosensitive cell, which becomes illuminated only when the filler cap of the vehicle is accessed for refuelling and thereby activates the speech means to output a message such as *UNLEADED FUEL ONLY* or *DIESEL ONLY.*

In one embodiment the speech means and activator means are contained in a common housing.

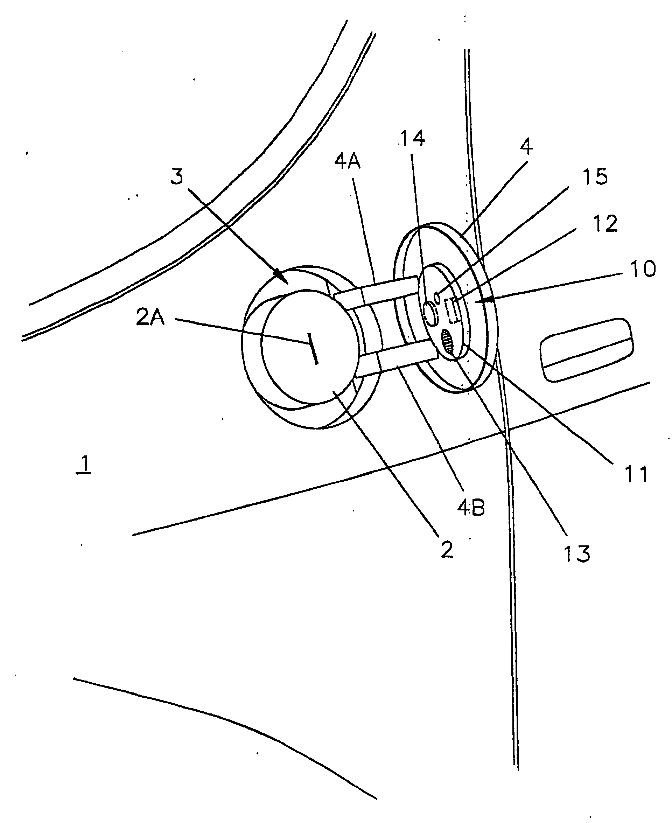

An embodiment of the invention will now be described by way of an example only and with reference to the accompanying drawing, the single figure of which is a perspective view of a refuelling safety device in accordance with this invention, when fitted to a vehicle.

Referring to the drawing there is shown part of a vehicle 1 having a filler cap 2 recessed into an aperture 3. The aperture 3 is closeable by means of a flap 4 hinged to the body of the vehicle by hinges 4A, 4B. The filler cap 2 may have a key way 2A to receive a key to lock it to the vehicle 1.

In accordance with the invention a refuelling safety device 10 is provided. The device 10 has a housing 11 in the form of disc. The device 10 is secured to the inside of the flap 4 adjacent the filler cap 2, by means of self adhesive tape or the like. The device 10 comprises an electronic circuit to relay a speech message in the form of a semiconductor 12 and loudspeaker 13.

The semiconductor 12 and loudspeaker 13 are powered by a battery 14. An activator in the form of photocell 15 activates the circuit. When the flap 4 is closed there is no light incident on the photocell 15 and the semiconductor 12 remains deactivated. However, when the flap 4 is opened to access the filler cap 2 for refuelling, light falls on the photocell 15 and activates the semiconductor 12 to output its stored message.

Accordingly, each time the flap 4 is opened for refuelling, the semiconductor 12 outputs, via the loudspeaker 13, an indication to the person refuelling the vehicle of the type or grade of fuel required for that vehicle, for example by speaking a message such as *UNLEADED FUEL ONLY* or *DIESEL ONLY.*

The invention may take a form different to that specifically described. For example the device could be permanently incorporated within the body of the vehicle, e.g. behind the recess 3, rather than being adhered onto the flap 4. The activator means could be other than a photocell, e.g. a mechanical switch operated by the opening of flap 4 or the removal of the filler cap 2.

The message may be pre-recorded or means may be provided enabling a person to record their own message.

The housing of the device may be coloured according to the message which the device relays. For instance, devices intended for unleaded petrol, diesel and lead replacement petrol (LRP) vehicles may have green, black and red housings respectively. These colours correspond with the colours used to signify the fuel type on pumps at filling stations and thus purchasers will immediately realise which device has to be purchased for their vehicles.

The device may be provided on a keyring so that in instances where it is not possible to mount the device on the vehicle, persons may conveniently remind themselves which type of fuel is to be used by activating the device manually prior to refuelling.

## Claims

1. A refuelling safety device comprising:
a) speech means to relay a speech message, said speech means being locatable adjacent a filler cap of a vehicle, and
b) activator means to activate the speech means when the filler cap of the vehicle is accessed for refuelling, the speech means being arranged to indicate the type or grade of fuel required for that vehicle to a person refuelling the vehicle.

2. A refuelling safety device as claimed in claim 1, in which the activator means comprises a photosensitive cell.

3. A refuelling safety device as claimed in claim 1, in which the activator means comprises a mechanical switch.

4. A refuelling safety device as claimed in any preceding claim, comprising means for attaching the device to the vehicle.

5. A vehicle comprising a refuelling safety device located adjacent a filler cap thereof, the device comprising:
a) speech means to relay a speech message, and
b) activator means to activate the speech means when the filler cap of the vehicle is accessed for refuelling, the speech means being arranged to indicate the type or grade of fuel required for that vehicle to a person refuelling the vehicle.

6. A vehicle as claimed in claim 5, comprising a cover flap for the filler cap, the activator means being arranged to activate the speech means when the cover flap is opened.

7. A vehicle as claimed in claim 6, in which the device is mounted to the flap.

8. A vehicle as claimed in claim 5, in which the device is mounted in a recess formed in the body of the vehicle behind said flap and adjacent said filler cap.

9. A vehicle as claimed in claim 5, in which the device is mounted to said filler cap.

10. A method refuelling a vehicle, the method comprising accessing the filler cap of the vehicle and thereby activating a refuelling safety device located adjacent the filler cap to cause a speech means of the device to output an audible message which indicates the type or grade of fuel required for that vehicle, and refuelling the vehicle with the indicated type or grade of fuel.

11. A method as claimed in claim 10, comprising attaching the refuelling safety device to the vehicle, adjacent the filler cap thereof prior to accessing the filler cap.

12. A method as claimed in claims 10 or 11, in which the filler cap is accessed by opening a cover flap, the refuelling safety device being activated when the flap is opened.

13. A method as claimed in claims 10 or 11, in which the refuelling safety device is activated when the filler cap is removed from the vehicle.
